# EUROPÄISCHE PATENTANMELDUNG

(11) **EP 4 679 541 A1**
(43) Veröffentlichungstag der Anmeldung: **14.01.2026**
(21) Anmeldenummer: 25182338.1
(22) Anmeldetag: 12.06.2025
(51) Int. Cl.: H01M 8/04089, H01M 8/04111, H01M 8/04119, H01M 8/04223, H01M 8/04291, H01M 8/04701, H01M 8/04828, H01M 8/0662

(54) **BRENNSTOFFZELLENABGASANLAGE, BRENNSTOFFZELLENSYSTEM UND VERFAHREN ZUM VERRINGERN DES WASSERSTOFFGEHALTS IN BRENNSTOFFZELLENABGAS**

(30) Priorität: 09.07.2024 DE 102024119423
(71) Anmelder: Purem GmbH, 66539 Neunkirchen (DE)
(72) Erfinder: Hammer, Jochen, Stuttgart (DE); Lehr, Tobias, Esslingen (DE)
(74) Vertreter: Ruttensperger Lachnit Trossin Gomoll

(57) **Zusammenfassung**

Eine Brennstoffzellenabgasanlage für ein Brennstoffzellensystem, insbesondere in einem Fahrzeug, umfasst eine Wasser-Abscheideanordnung (24) zum Abscheiden von in Brennstoffzellenabgas (B) enthaltenem Wasser (W) sowie eine Wasserstoff-Katalysatoranordnung (30) zum katalytischen Umsetzen von im Brennstoffzellenabgas (B) enthaltenem Wasserstoff stromabwärts der Wasser-Abscheideanordnung (24).

## Beschreibung

Die vorliegende Erfindung betrifft eine Brennstoffzellenabgasanlage, ein eine derartige Brennstoffzellenabgasanlage enthaltendes Brennstoffzellensystem und ein Verfahren zum Verringern des Wasserstoffgehalts in dem von einer Brennstoffzelle eines Brennstoffzellensystems abgegebenen Brennstoffzellenabgas.

Bei der Erzeugung elektrischer Energie in einem beispielsweise mit einer oder mehreren PEM-Brennstoffzellen aufgebauten Brennstoffzellensystem entsteht insbesondere im Kathodenbereich Wasser. Dieses wird im Allgemeinen als Wasserdampf in dem den Kathodenbereich verlassenden Kathodenabgas, welches im Wesentlichen das auch zur Umgebung abzugebende Brennstoffzellenabgas bereitstellt, mitgeführt und über eine Brennstoffzellenabgasanlage zur Umgebung abgegeben. Vor allem bei vergleichsweise niedriger Umgebungstemperatur entsteht bei der Abgabe von stark mit Wasserdampf angereichertem Brennstoffzellenabgas in die Umgebungsluft aufgrund der spontanen Absenkung der Temperatur des Brennstoffzellenabgases beim Kontakt mit der Umgebungstemperatur durch auskondensierendes Wasser Nebel. Dieser kann die Sicht im Umfeld eines mit einem derartigen Brennstoffzellensystem ausgestatteten Fahrzeugs beeinträchtigen und kann auch zur Eisbildung auf dem Boden im Bereich eines mit einem derartigen Brennstoffzellensystem ausgestatteten Fahrzeugs führen. Auch kann bei derartigen Brennstoffzellensystemen beispielsweise bei oder nach Durchführung von Purge-Vorgängen das zur Umgebung abgegebenen Brennstoffzellenabgas einen übermäßig hohem Anteil an Wasserstoff (H₂) enthalten.

Es ist die Aufgabe der vorliegenden Erfindung, eine Brennstoffzellenabgasanlage, ein damit aufgebautes Brennstoffzellensystem sowie ein Verfahren zum Verringern des Wasserstoffgehalts in Brennstoffzellenabgas bereitzustellen, mit welchen bei baulich einfacher Ausgestaltung bei verminderter Abgabe von Wasserstoff mit dem Brennstoffzellenabgas einer starken Nebelbildung bei Abgabe des Brennstoffzellenabgases in die Umgebung entgegengewirkt wird.

Gemäß einem ersten Aspekt der vorliegenden Erfindung wird diese Aufgabe gelöst durch ein Brennstoffzellenabgasanlage für ein Brennstoffzellensystem, insbesondere in einem Fahrzeug, umfassend:
- eine Wasser-Abscheideanordnung zum Abscheiden von in Brennstoffzellenabgas enthaltenem Wasser
- eine Wasserstoff-Katalysatoranordnung zum katalytischen Umsetzen von im Brennstoffzellenabgas enthaltenem Wasserstoff stromabwärts der Wasser-Abscheideanordnung.

Die erfindungsgemäß aufgebaute Brennstoffzellenabgasanlage nutzt die bei der katalytischen Umsetzung des molekularen Wasserstoffs (H₂) in der Wasserstoff-Katalysatoranordnung freigesetzte Wärme zur Erwärmung des die Wasserstoff-Katalysatoranordnung durchströmenden bzw. verlassenden, wasserstoffentreicherten Brennstoffzellenabgases. Durch die Erwärmung des wasserstoffentreicherten Brennstoffzellenabgases nimmt die Wasserdampf-Aufnahmekapazität des Brennstoffzellenabgases deutlich zu, so dass auch dann, wenn bei dieser katalytischen Umsetzung von Wasserstoff mit im Brennstoffzellenabgas enthaltenem molekularen Sauerstoff (O₂) Wasser bzw. Wasserdampf entsteht, die relative Feuchte des die Wasserstoff-Katalysatoranordnung verlassenden Brennstoffzellenabgases im Vergleich zu dem aus einer Brennstoffzelle abgegebenen Brennstoffzellenabgas derart abgesenkt ist, dass beim Abgeben dieses Brennstoffzellenabgases auch in vergleichsweise kalte Umgebungsluft ein spontanes Erreichen eines Sättigungsgrad von 100 % und damit ein Ausfallen von Nebel weitestgehend verhindert werden kann. Dazu trägt auch bei, dass stromaufwärts der Wasserstoff-Katalysatoranordnung in der Wasser-Abscheideanordnung im Brennstoffzellenabgas in Tröpfchenform mitgeführtes Wasser abgeschieden wird, so dass das Katalysatormaterial der Wasserstoff-Katalysatoranordnung vor einem übermäßigen Kontakt mit Wasser geschützt wird und bereits beim Eintritt in die Wasserstoff-Katalysatoranordnung der Wassergehalt im Brennstoffzellenabgas gemindert ist.

Einhergehend mit der Absenkung der relativen Feuchte und damit der Minderung der Gefahr, dass beim Kontakt mit kalte Umgebungsluft Nebel gebildet wird, wird in der erfindungsgemäß aufgebauten Brennstoffzellenabgasanlage der Wasserstoffgehalt im Brennstoffzellenabgas und damit die mit dem Brennstoffzellenabgas zur Umgebung ausgestoßene Menge des potentiell als Treibhausgas zu betrachtenden Wasserstoffs deutlich gesenkt.

Um dann, wenn beispielsweise bei oder nach Durchführung eines Purge-Vorgangs eine vergleichsweise große Menge an Wasserstoff im Brennstoffzellenabgas enthalten ist, eine Beschädigung der Wasserstoff-Katalysatoranordnung durch Überhitzung zu vermeiden, kann eine zur Durchströmung mit Brennstoffzellenabgas freigebbare und absperrbare Bypassleitung zum wahlweisen Leiten wenigstens eines Teils des Brennstoffzellenabgases an der Wasserstoff-Katalysatoranordnung vorbei vorgesehen sein.

Um Information darüber bereitzustellen, dass aufgrund einer zu großen Wasserstoffmenge im Brennstoffzellenabgas die potentielle Gefahr einer Beschädigung der Wasserstoff-Katalysatoranordnung besteht, kann stromaufwärts der Wasserstoff-Katalysatoranordnung ein Wasserstoffsensor zur Bereitstellung von den Wasserstoffgehalt in dem Brennstoffzellenabgas repräsentierender Information vorgesehen.

Alternativ oder zusätzlich kann eine Information über eine übermäßige Belastung bzw. eine Überhitzung der Wasserstoff-Katalysatoranordnung dadurch bereitgestellt werden, dass stromabwärts der Wasserstoff-Katalysatoranordnung oder/und in der Wasserstoff-Katalysatoranordnung ein Temperatursensor zur Bereitstellung von eine Temperatur im Bereich der Wasserstoff-Katalysatoranordnung repräsentierender Information vorgesehen ist.

Die in dem Brennstoffzellenabgasstrom enthaltene kinetische Energie kann beispielsweise dadurch genutzt werden, dass stromaufwärts der Wasserstoff-Katalysatoranordnung und stromabwärts der Wasser-Abscheideanordnung eine Turbinenanordnung mit einem von dem Brennstoffzellenabgas angetriebene Turbinenbereich und einem mit dem Turbinenbereich gekoppelten Verdichterbereich zum Erzeugen eines Prozessgasstroms vorgesehen ist. Als Prozessgas kann beispielsweise die als Kathodengas in den Kathodenbereich einer Brennstoffzelle einzuleitende Luft genutzt werden.

Zur katalytischen Umsetzung des Wasserstoffs kann die Wasserstoff-Katalysatoranordnung einen Oxidationskatalysator beispielsweise mit Platin oder/und Palladium als Katalysatormaterial umfassen. Bei dieser Oxidationsreaktion wird der Wasserstoff mit Sauerstoff zu Wasser umgesetzt. Obgleich dadurch der Wassergehalt im Brennstoffzellenabgas zunimmt, sorgt die bei der katalytischen Umsetzung freigesetzte Wärme für eine derart starke Erwärmung des Brennstoffzellenabgases, dass trotz Aufnahme von bei der katalytischen Umsetzung erzeugtem Wasser im Brennstoffzellenabgas die relative Feuchte substantiell verringert wird und dadurch die Nebelbildung bei Kontakt mit vergleichsweise kalter Umgebungsluft weitestgehend verhindert wird.

Die vorliegende Erfindung betrifft ferner ein Brennstoffzellensystem, insbesondere in einem Fahrzeug, umfassend
- wenigstens eine Brennstoffzelle mit einem mit Wasserstoff enthaltendem Anodengas zu speisenden Anodenbereich und einem mit Sauerstoff enthaltendem Kathodengas zu speisenden Kathodenbereich,
- eine erfindungsgemäß aufgebaute Brennstoffzellenabgasanlage, wobei die Wasser-Abscheideanordnung zur Aufnahme von am Kathodenbereich der wenigstens einen Brennstoffzelle abgegebenem Brennstoffzellenabgas mit dem Kathodenbereich verbunden ist.

Die eingangs angeführte Aufgabe wird weiter gelöst durch ein Verfahren zum Verringern des Wasserstoffgehalts in in einem Brennstoffzellensystem erzeugtem Brennstoffzellenabgas, umfassend die Maßnahmen:
a) Abscheiden von in dem Brennstoffzellenabgas enthaltenem Wasser
b) Verringern des Wasserstoffgehalts in dem wasserentreicherten Brennstoffzellenabgas in einer katalytischen Reaktion;
c) Abgeben des bei der Maßnahme b) wasserstoffentreicherten und erwärmten Brennstoffzellenabgases zur Umgebung.

Durch die katalytische Umsetzung des im Brennstoffzellenabgas enthaltenen Wasserstoffs wird Wärme freigesetzt, durch welche auch dann, wenn bei der katalytischen Umsetzung von im Brennstoffzellenabgas enthaltenem Wasserstoff mit im Brennstoffzellenabgas enthaltenem Sauerstoff Wasser entsteht und im Brennstoffzellenabgas aufgenommen wird, die Temperatur des Brennstoffzellenabgases derart stark angehoben wird, dass dessen relative Feuchte deutlich abnimmt und auch bei Kontakt mit vergleichsweise kalter Umgebungsluft eine Nebelbildung bei gleichzeitiger Absenkung der Menge des zur Umgebung ausgestoßenen Wasserstoffs weitestgehend verhindert wird.

Um eine Überhitzung einer zur Durchführung der katalytischen Reaktion genutzten Wasserstoff-Katalysatoranordnung zu vermeiden, wird vorgeschlagen, dass die Maßnahme b) das Erfassen des Wasserstoffgehalts in dem der katalytischen Reaktion zuzuführenden Brennstoffzellenabgas umfasst, wobei dann, wenn der Wasserstoffgehalt in dem der katalytischen Reaktion zuzuführenden Brennstoffzellenabgas über einer vorbestimmten Wasserstoffgehalt-Schwelle liegt, wenigstens ein Teil des der katalytischen Reaktion zuzuführenden Brennstoffzellenabgases nicht der katalytischen Reaktion zugeführt wird.

Alternativ oder zusätzlich kann zum Verhindern einer Überhitzung einer zur Durchführung der katalytischen Reaktion genutzten Wasserstoff-Katalysatoranordnung die Maßnahme b) das Erfassen einer Temperatur des Brennstoffzellenabgases nach Durchführung der katalytischen Reaktion oder/und das Erfassen einer Temperatur einer zur Durchführung der katalytischen Reaktion genutzten Wasserstoff-Katalysatoranordnung umfassen, wobei dann, wenn die Temperatur des Brennstoffzellenabgases oder/und die Temperatur der Wasserstoff-Katalysatoranordnung über einer vorbestimmten Temperatur-Schwelle liegt, wenigstens ein Teil des der katalytischen Reaktion zuzuführenden Brennstoffzellenabgas nicht der katalytischen Reaktion zugeführt wird.

Um auch dann, wenn beispielsweise aufgrund eines übermäßig hohen Wasserstoffgehalts im Brennstoffzellenabgas ein Teil des Brennstoffzellenabgases bzw. des darin enthaltenen Wasserstoffs nicht der katalytischen Reaktion zugeführt wird, die Nebelbildung beim Abgeben des Brennstoffzellenabgases in die Umgebung effizient verhindern zu können, wird vorgeschlagen, dass die Maßnahme b) das Zusammenführen des nicht der katalytischen Reaktion zugeführten Teils des Brennstoffzellenabgases und des der katalytischen Reaktion zugeführten Teil des Brennstoffzellenabgases nach Durchführung der katalytischen Reaktion und vor Durchführung der Maßnahme c) umfasst.

Das erfindungsgemäße Verfahren wird vorteilhafterweise vermittels einer erfindungsgemäß aufgebauten Brennstoffzellenabgasanlage in einem diese enthaltenden, erfindungsgemäß aufgebauten Brennstoffzellensystem durchgeführt.

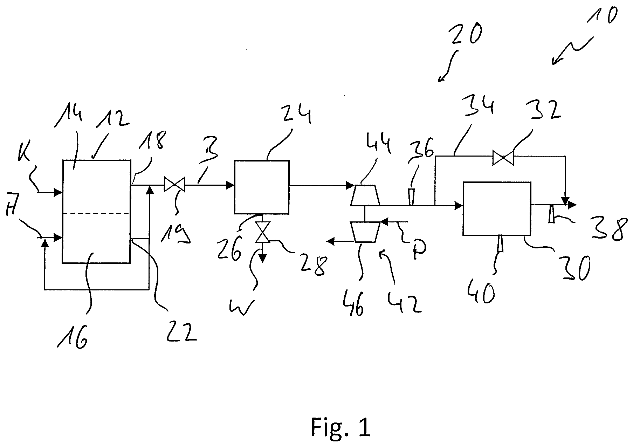

Die vorliegende Erfindung wird nachfolgend mit Bezug auf die beiliegenden Fig. 1 detailliert beschrieben, welche in prinzipieller Darstellung ein Brennstoffzellensystem mit einer Brennstoffzellenabgasanlage zeigt.

In Fig. 1 ist ein beispielsweise zur Erzeugung elektrischer Energie in einem Fahrzeug vorgesehenes Brennstoffzellensystem allgemein mit 10 bezeichnet. Das Brennstoffzellensystem 10 umfasst eine beispielsweise als Brennstoffzellenstapel oder dergleichen ausgebildete Brennstoffzelle 12 mit einem Kathodenbereich 14 und einem Anodenbereich 16. Dem Kathodenbereich 14 wird durch einen Kompressor oder dergleichen ein Sauersoff enthaltendes Kathodengas K, beispielsweise Luft, zugeführt. Dem Anodenbereich 16 wird ein Wasserstoff (H₂) enthaltendes Anodengas A zugeführt.

Ein im Brennstoffzellenprozess entstehendes Kathodenabgas tritt an einem Kathodenbereich-Austrittsbereich 18 aus dem Kathodenbereich 14 aus und strömt beispielsweise über ein wahlweise absperrbares Ventil 19 in Richtung zu einer allgemein mit 20 bezeichneten Brennstoffzellenabgasanlage. An einem Anodenbereich-Austrittsbereich 22 beispielsweise bei Durchführung eines Purge-Vorgangs austretendes Anodenabgas kann in den Arbeitsprozess rezykliert werden, um den darin enthaltenen Wasserstoff zur Erzeugung elektrischer Energie nutzen zu können, oder/und kann zusammen mit dem Kathodenabgas als Brennstoffzellenabgas B der Brennstoffzellenabgasanlage 20 zugeführt werden.

Im Brennstoffzellenbetrieb entsteht insbesondere im Kathodenbereich 14 Wasser, welches im Allgemeinen als Wasserdampf, teilweise auch in Tröpfchenform, in dem im Wesentlichen Sauerstoff und Stickstoff enthaltenden Kathodenabgas mitgeführt wird. Der Gehalt des Wassers bzw. Wasserdampfs in dem Kathodenabgas kann vergleichsweise groß sein und nahe einer vollständigen Sättigung, also einer relativen Feuchte von 100%, sein. Wird ein derartiges stark mit Wasser bzw. Wasserdampf angereichertes Kathodenabgas als Brennstoffzellenabgas B zur Umgebung ausgestoßen, besteht die Gefahr, dass insbesondere bei vergleichsweise niedriger Umgebungstemperatur beim Kontakt des Brennstoffzellenabgases B mit der kalten Umgebungsluft Wasser auskondensiert und somit Nebel entsteht.

Um bei der in Fig. 1 dargestellten Brennstoffzellenabgasanlage 20 bzw. dem diese aufweisenden Brennstoffzellensystem 10 die Gefahr einer Nebelbildung bei der Abgabe von Brennstoffzellenabgas B weitestgehend zu eliminieren, umfasst die Brennstoffzellenabgasanlage 20 eine Wasser-Abscheideanordnung 24, in welcher im Brennstoffzellenabgas B in flüssiger Form, also beispielsweise in Tröpfchenform, mitgeführtes Wasser W aus dem Brennstoffzellenabgas B beispielsweise durch Erzeugung einer Drallströmung oder/und Strömungsberuhigung und unter Ausnutzung der Schwerkraft abgeschieden wird. In einem Abscheideanordnung-Austrittsbereich 26, welcher durch ein zugeordnetes Ventil 28 wahlweise absperrbar und freigebbar ist, kann das in der Wasser-Abscheideanordnung 24 abgeschiedene Wasser W abgeführt und entweder zur Umgebung abgeleitet oder in dem Brennstoffzellenprozess rückgespeist werden.

Das wasserentreicherte Brennstoffzellenabgas B verlässt die Wasser-Abscheideanordnung 24 in Richtung zu einer Wasserstoff-Katalysatoranordnung 30. Die Wasserstoff-Katalysatoranordnung 30 ist als Oxidationskatalysator aufgebaut und kann einen mit Katalysatormaterial, beispielsweise Platin oder/und Palladium, aufgebauten bzw. beschichteten und von dem Brennstoffzellenabgas B durchströmbaren Monolithen umfassen. Bei der in der Wasserstoff-Katalysatoranordnung 30 ablaufenden katalytischen Reaktion wird im Brennstoffzellenabgas B enthaltener molekularer Wasserstoff (H₂) mit im Brennstoffzellenabgas B ebenfalls enthaltenem molekularem Sauerstoff (O₂) zu Wasser (H₂O) umgesetzt, welches zusammen mit dem in der Wasser-Abscheideanordnung 24 wasserentreicherten und in der Wasserstoff-Katalysatoranordnung 30 wasserstoffentreicherten Brennstoffzellenabgas B zur Umgebung abgegeben werden kann.

Bei der katalytischen Umsetzung des Wasserstoffs in der Wasserstoff-Katalysatoranordnung 30 wird Wärme freigesetzt, welche dafür sorgt, dass die Temperatur des die Wasserstoff-Katalysatoranordnung 30 verlassenden Brennstoffzellenabgases B deutlich angehoben wird. Die Temperaturzunahme des Brennstoffzellenabgases B hat zur Folge, dass dessen Wasseraufnahmekapazität deutlich ansteigt, was entsprechend eine Abnahme der relativen Feuchte des die Wasserstoff-Katalysatoranordnung 30 verlassenden Brennstoffzellenabgases B zur Folge hat, obgleich dieses Brennstoffzellenabgas B auch das bei der katalytischen Umsetzung entstehende Wasser enthält.

Das Ausstoßen dieses Brennstoffzellenabgases B zur Umgebung hat aufgrund der deutlich gesenkten relativen Feuchte auch dann, wenn dieses in Kontakt mit vergleichsweise kalter Umgebungsluft kommt, nicht zur Folge, dass die Temperatur des Brennstoffzellenabgases B unter den Taupunkt absinkt. Eine spontane Nebelbildung beim Kontakt des Brennstoffzellenabgases B mit der kalten Umgebungsluft kann somit weitestgehend vermeiden werden. Gleichzeitig wird durch die katalytische Umsetzung auch die Menge des zur Umgebung ausgestoßenen, potentiell klimaschädlichen Wasserstoffs gemindert.

Im Brennstoffzellenbetrieb kann phasenweise, beispielsweise bei oder nach Durchführung von Purge-Vorgängen, der Wasserstoffgehalt in den in die Brennstoffzellen-abgasanlage 20 eingeleiteten Brennstoffzellenabgas B vergleichsweise hoch sein. Wird ein eine große Menge an Wasserstoff enthaltendes Brennstoffzellenabgas B in die Wasserstoff-Katalysatoranordnung 30 eingeleitet, besteht die potentielle Gefahr einer Überhitzung und damit einer Beschädigung der Wasserstoff-Katalysatoranordnung 30. Um dies zu vermeiden, weist die Brennstoffzellen-Abgasanlage 20 eine durch ein Ventil 32 wahlweise absperrbare bzw. zur Durchströmung freigebbare Bypassleitung 34 auf. Die Bypassleitung 34 umgeht die Wasserstoff-Katalysatoranordnung 30 und zweigt somit das oder zumindest einen Teil des Brennstoffzellenabgases B vor Einleitung in die Wasserstoff-Katalysatoranordnung 30 ab, wenn das Ventil 32 die Bypassleitung 34 zur Durchströmung freigibt.

Stromaufwärts der Wasserstoff-Katalysatoranordnung 30, beispielsweise in Strömungsrichtung zwischen der Wasser-Abscheideanordnung 24 der Wasserstoff-Katalysatoranordnung 30 ist ein Wasserstoffsensor 36 vorgesehen, welcher die Wasserstoffkonzentration bzw. die Wasserstoffmenge im Brennstoffzellenabgas B erfasst bzw. eine diese Größe repräsentierende Information bereitstellt. Abhängig von der die Wasserstoffkonzentration bzw. den Wasserstoffgehalt im Brennstoffzellenabgas B repräsentierenden Information kann das Ventil 32 zum Absperren der Bypassleitung 34 angesteuert werden, wenn die die Wasserstoffkonzentration bzw. den Wasserstoffgehalt repräsentierende und vom Wasserstoffsensor 36 gelieferte Information einen unter einer Wasserstoffgehalt-Schwelle liegenden Wasserstoffgehalt indiziert, welcher nicht zu einer Überhitzung der Wasserstoff-Katalysatoranordnung 30 bei Durchführung der katalytischen Reaktion führt. Indiziert die vom Wasserstoffsensor 36 generierte Information einen übermäßig großen Wasserstoffgehalt bzw. eine übermäßig hohe Wasserstoffkonzentration im Brennstoffzellenabgas B, kann das Ventil 32 zum zumindest teilweisen Freigeben der Bypassleitung 34 angesteuert werden, so dass, beispielsweise auch abhängig von dem Wasserstoffgehalt im Brennstoffzellenabgas B, ein Teil des Brennstoffzellenabgases B an der Wasserstoff-Katalysatoranordnung 30 vorbeigeleitet wird. Dieser Teil des Brennstoffzellenabgases B wird stromabwärts der Wasserstoff-Katalysatoranordnung 30 mit dem die Wasserstoff-Katalysatoranordnung 30 verlassenden, wasserstoffentreicherten und erwärmten Teil des Brennstoffzellenabgases B zusammengeführt, so dass auch der die Brennstoffzellenabgasanlage 20 verlassende Gesamtstrom des Brennstoffzellenabgases B eine angehobene Temperatur aufweist und daher einer Nebelbildung beim Kontakt mit vergleichsweise kalter Umgebungstemperatur entgegengewirkt werden kann.

Alternativ oder zusätzlich zum Bereitstellen der den Wasserstoffgehalt im Brennstoffzellenabgas B repräsentierenden Information durch den Wasserstoffsensor 36 kann eine die Temperatur des Brennstoffzellenabgases B stromabwärts der Wasserstoff-Katalysatoranordnung 30 repräsentierende Information durch einen Temperatursensor 38 bereitgestellt werden. Die Temperatur des Brennstoffzellenabgases B am Austritt der Wasserstoff-Katalysatoranordnung 30 ist ein Indikator für das Ausmaß der in der Wasserstoff-Katalysatoranordnung 30 ablaufenden katalytischen Reaktion. Liegt diese Temperatur über einer Temperatur-Schwelle, ist dies ein Indikator dafür, dass in der Wasserstoff-Katalysatoranordnung 30 eine übermäßig starke katalytische Reaktion abläuft und die Gefahr einer Überhitzung besteht. Auch diese Information kann genutzt werden, um zum Senken der Temperatur der Wasserstoff-Katalysatoranordnung 30 einen Teil des Brennstoffzellenabgases B und damit auch einen Teil des darin enthaltenen Wasserstoffs über die Bypassleitung 34 an der Brennstoffzellen-Abgasanlage 30 vorbeizuleiten und diesen Teil des Brennstoffzellenabgases B vor dem Abgeben zur Umgebung mit dem durch die Wasserstoff-Katalysatoranordnung 30 hindurch geleiteten Teil des Brennstoffzellenabgases B zusammenzuführen.

Alternativ oder zusätzlich besteht auch die Möglichkeit, durch einen Temperatursensor 40 unmittelbar die Temperatur der Wasserstoff-Katalysatoranordnung 30 beispielsweise an der Oberfläche des katalytischen Materials derselben zu erfassen und diese Temperatur als Indikator dafür zu nutzen, ob ein Übermaß an Wasserstoff in die Wasserstoff-Katalysatoranordnung 30 eingeleitet wird und zum Vermeiden einer Überhitzung ein Teil des Brennstoffzellenabgases B über die Bypassleitung 34 an der Wasserstoff-Katalysatoranordnung 30 vorbeigeleitet werden sollte.

Durch das Bereitstellen von Information, welche dazu genutzt werden kann, eine Überhitzung der Wasserstoff-Katalysatoranordnung 30 bei zu großem Wasserstoffgehalt in dem Brennstoffzellenabgas B zu vermeiden, wird es möglich, die Wasserstoff-Katalysatoranordnung 30 derart zu dimensionieren, dass diese im normalen Brennstoffzellenbetrieb, in welchem das Brennstoffzellenabgas B eine vergleichsweise geringe Menge an Wasserstoff enthält, eine ausreichende Kapazität zur katalytischen Umsetzung dieses Wasserstoffs bereitstellt, dafür jedoch nicht überdimensioniert ist. Für Betriebszustände, in welchen eine übermäßig große Wasserstoffmenge aus der Brennstoffzelle 12 ausgestoßen wird, wäre eine so dimensionierte Wasserstoff-Katalysatoranordnung 30 unterdimensioniert. Gleichwohl kann eine Überlastung einer derartigen potentiell unterdimensionierten Wasserstoff-Katalysatoranordnung 30 auch in Zuständen, in welchen das Brennstoffzellenabgas B eine übermäßig große Konzentration an Wasserstoff aufweist, durch das Leiten eines Teils des Brennstoffzellenabgases durch die Bypassleitung 34 vermieden werden.

Die in Fig. 1 dargestellte Brennstoffzellenabgasanlage 20 enthält ferner beispielsweise in Strömungsrichtung zwischen der Wasser-Abscheideeinheit 24 und der Wasserstoff-Katalysatoranordnung 30 eine allgemein mit 42 bezeichnete Turbinenanordnung. Die Turbinenanordnung 42 ist grundsätzlich nach Art eines in Abgasanlagen von Brennkraftmaschinen eingesetzten Turboladers aufgebaut und umfasst einen durch das in der Brennstoffzellenabgasanlage 20 strömende Brennstoffzellenabgas B angetriebenen Turbinenbereich 44 sowie einen mit dem Turbinenbereich 44 gekoppelten bzw. durch diesen antreibbaren Verdichterbereich 46. Die im Brennstoffzellenabgas B enthaltene kinetische Energie kann somit zum Teil genutzt werden, um vermittels der Turbinenanordnung 42 einen Strom eines Prozessgases P zu erzeugen. Beispielsweise kann das Prozessgas P das oder zumindest einen Teil des in den Kathodenbereich 14 der Brennstoffzelle 12 einzuleitenden Kathodengases K umfassen.

Es ist darauf hinzuweisen, dass die Brennstoffzellenabgasanlage weitere Systembereiche, wie z. B. einen Schalldämpfer oder dergleichen, beispielsweise stromabwärts der Wasserstoff-Katalysatoranordnung 30 umfassen, so dass das Brennstoffzellenabgas B nicht direkt aus der Wasserstoff-Katalysatoranordnung, sondern über derartige weitere Systembereiche zur Umgebung abgegeben wird.

## Patentansprüche

1. Brennstoffzellenabgasanlage für ein Brennstoffzellensystem, insbesondere in einem Fahrzeug, umfassend:
- eine Wasser-Abscheideanordnung (24) zum Abscheiden von in Brennstoffzellenabgas (B) enthaltenem Wasser (W),
- eine Wasserstoff-Katalysatoranordnung (30) zum katalytischen Umsetzen von im Brennstoffzellenabgas (B) enthaltenem Wasserstoff stromabwärts der Wasser-Abscheideanordnung (24).

2. Brennstoffzellenabgasanlage nach Anspruch 1,
**dadurch gekennzeichnet, dass** eine zur Durchströmung mit Brennstoffzellenabgas (B) freigebbare und absperrbare Bypassleitung (34) zum wahlweisen Leiten wenigstens eines Teils des Brennstoffzellenabgases (B) an der Wasserstoff-Katalysatoranordnung (30) vorbei vorgesehen ist.

3. Brennstoffzellenabgasanlage nach Anspruch 1 oder 2,
**dadurch gekennzeichnet, dass** stromaufwärts der Wasserstoff-Katalysatoranordnung (30) ein Wasserstoffsensor (36) zur Bereitstellung von den Wasserstoffgehalt in dem Brennstoffzellenabgas (B) repräsentierender Information vorgesehen ist.

4. Brennstoffzellenabgasanlage nach einem der Ansprüche 1-3,
**dadurch gekennzeichnet, dass** stromabwärts der Wasserstoff-Katalysatoranordnung (30) oder/und in der Wasserstoff-Katalysatoranordnung (30) ein Temperatursensor (38, 40) zur Bereitstellung von eine Temperatur im Bereich der Wasserstoff-Katalysatoranordnung (30) repräsentierender Information vorgesehen ist.

5. Brennstoffzellenabgasanlage nach einem der Ansprüche 1-4,
**dadurch gekennzeichnet, dass** stromaufwärts der Wasserstoff-Katalysatoranordnung (30) und stromabwärts der Wasser-Abscheideanordnung (24) eine Turbinenanordnung (42) mit einem von dem Brennstoffzellenabgas (B) angetriebenen Turbinenbereich (44) und einem mit dem Turbinenbereich (44) gekoppelten Verdichterbereich (46) zum Erzeugen eines Prozessgasstroms vorgesehen ist.

6. Brennstoffzellenabgasanlage nach einem der Ansprüche 1-5,
**dadurch gekennzeichnet, dass** die Wasserstoff-Katalysatoranordnung (30) einen Oxidationskatalysator umfasst.

7. Brennstoffzellensystem, insbesondere in einem Fahrzeug, umfassend
- wenigstens eine Brennstoffzelle (12) mit einem mit Wasserstoff enthaltendem Anodengas (A) zu speisenden Anodenbereich (16) und einem mit Sauerstoff enthaltendem Kathodengas (L) zu speisenden Kathodenbereich (14),
- eine Brennstoffzellenabgasanlage (20) nach einem der Ansprüche 1-6, wobei die Wasser-Abscheideanordnung (24) zur Aufnahme von am Kathodenbereich (14) der wenigstens einen Brennstoffzelle (12) abgegebenem Brennstoffzellenabgas (B) mit dem Kathodenbereich (14) verbunden ist.

8. Verfahren zum Verringern des Wasserstoffgehalts in in einem Brennstoffzellensystem erzeugtem Brennstoffzellenabgas (B), umfassend die Maßnahmen:
a) Abscheiden von in dem Brennstoffzellenabgas (B) enthaltenem Wasser (W),
b) Verringern des Wasserstoffgehalts in dem wasserentreicherten Brennstoffzellenabgas (B) in einer katalytischen Reaktion;
c) Abgeben des bei der Maßnahme b) wasserstoffentreicherten und erwärmten Brennstoffzellenabgases (B) zur Umgebung.

9. Verfahren nach Anspruch 8,
**dadurch gekennzeichnet, dass** die Maßnahme b) das Erfassen eines Wasserstoffgehalts in dem der katalytischen Reaktion zuzuführenden Brennstoffzellenabgas (B) umfasst, wobei dann, wenn der Wasserstoffgehalt in dem der katalytischen Reaktion zuzuführenden Brennstoffzellenabgas (B) über einer vorbestimmten Wasserstoffgehalt-Schwelle liegt, wenigstens ein Teil des der katalytischen Reaktion zuzuführenden Brennstoffzellenabgases (B) nicht der katalytischen Reaktion zugeführt wird.

10. Verfahren nach Anspruch 8 oder 9,
**dadurch gekennzeichnet, dass** die Maßnahme b) das Erfassen einer Temperatur des Brennstoffzellenabgases (B) nach Durchführung der katalytischen Reaktion oder/und das Erfassen einer Temperatur einer zur Durchführung der katalytischen Reaktion genutzten Wasserstoff-Katalysatoranordnung (30) umfasst, wobei dann, wenn die Temperatur des Brennstoffzellenabgaseses (B) oder/und die Temperatur der Wasserstoff-Katalysatoranordnung (30) über einer vorbestimmten Temperatur-Schwelle liegt, wenigstens ein Teil des der katalytischen Reaktion zuzuführenden Brennstoffzellenabgas (B) nicht der katalytischen Reaktion zugeführt wird.

11. Verfahren nach Anspruch 10, **dadurch gekennzeichnet, dass** die Maßnahme b) das Zusammenführen des nicht der katalytischen Reaktion zugeführten Teils des Brennstoffzellenabgases (B) und des der katalytischen Reaktion zugeführten Teil des Brennstoffzellenabgases (B) nach Durchführung der katalytischen Reaktion und vor Durchführung der Maßnahme c) umfasst.

12. Verfahren nach einem der Ansprüche 8-11, **dadurch gekennzeichnet, dass** das Verfahren vermittels einer Brennstoffzellenabgasanlage (20) nach einem der Ansprüche 1-6 in einem Brennstoffzellensystem (10) nach Anspruch 7 durchgeführt wird.
